# EUROPEAN PATENT SPECIFICATION

(11) **EP 3 549 848 B1**
(45) Date of publication and mention of the grant of the patent: **12.05.2021**
(21) Application number: 19164331.1
(22) Date of filing: 21.03.2019
(51) Int. Cl.: B62D 59/04

(54) **TRAILER PROVIDED WITH SUPPORT FOR MANUAL MOVEMENT**
ANHÄNGER MIT UNTERSTÜTZUNG FÜR MANUELLE BEWEGUNG
REMORQUE POURVUE DE SUPPORT POUR MOUVEMENT MANUEL

(30) Priority: 22.03.2018 NL 2020647
(43) Date of publication of application: 09.10.2019
(73) Proprietor: Wagenbouw Hapert B.V., 5527 AL Hapert (NL)
(72) Inventor: KEERIS, Adrianus, Joannes, Cornelius, Josephus, Maria, 5511 AG Knegsel (NL)
(74) Representative: Verhees, Godefridus Josephus Maria

(56) References cited:
- WO-A1-2011/108948
- DE-U1-202009 005 185
- DE-U1-202012 010 042
- DE-U1-202016 101 279

## Description

### Technical field of the invention

The invention relates to a trailer to be coupled behind a vehicle, which trailer comprises:
- a chassis on which a loading floor is present, as well as
- wheels connected to the chassis,
- a front tow bar connected to the chassis and being provided with a coupling for coupling the trailer to a tow hook of a towing vehicle,
- a rear wall connected to the loading floor,
- a drive which is connected to at least one of the wheels, which drive comprises a motor as well as control means for controlling the motor, and
- an activation sensor which is coupled to the control means, the control means being arranged such that they control the drive in dependence on a signal coming from the activation sensor.

### Background of the invention

A trailer according to the preamble of claim 1 is known from DE 20 2016 101279 U1. When a trailer is used it often happens that it is desirable to move the trailer manually. This is the case, for example, if the trailer is parked somewhere and it is to be moved a little because it is in the way or if the driver of the towing vehicle is not capable of reversing and disconnects the trailer and pushes it backwards. If the relocation of the trailer is too heavy, for example because the terrain on which the trailer is to be relocated is uneven or sloping or soft so that the wheels sink into it, a towing vehicle or a proper driver is first to be brought in for the relocation. This is particularly the case with heavy trailers, such as double axle trailers or heavily loaded single or double axle trailers.

### Summary of the invention

An object of the invention is to provide a trailer in which the above-mentioned problems do not occur. More particularly, it is an object of the invention to provide a trailer that is easy to move manually under all circumstances. To this end, the trailer according to the invention is characterized in that the activation sensor is a pressure sensor or a force sensor which is connected to the front tow bar or the rear wall and measures the pressure or force applied to the front tow bar or the rear wall, so that when the trailer is pulled or pushed manually the control means control the drive. If it is desired to move the trailer manually, this will be detected by the activation sensor, which subsequently sends a signal to the control means which activate the drive to support manual movement. As a result, the trailer according to the invention can easily be moved manually and in any situation by one person. Preferably, the trailer comprises two activation sensors, wherein one of the activation sensors is connected to the front tow bar and the other activation sensor is connected to the rear wall.

An embodiment of the trailer according to the invention is characterized in that the trailer furthermore includes a coupling sensor which records whether or not the trailer is coupled to a vehicle, where the control means are arranged such that they do not activate the drive until the coupling sensor sends a signal that there is no coupling to a vehicle. This prevents the drive from being activated accidentally in undesired situations.

The motor is preferably an electric motor and the drive further includes a battery which is connected to the electric motor, where the control means are arranged such that, in dependence on the signal coming from the activation sensor, they energize the electric motor more or less.

The motor of the drive may be connected via a coupling to the at least one driven wheel, wherein the control means can open and close the coupling, or the motor may be directly connected to the at least one driven wheel.

The trailer is provided with a front tow bar by which the trailer can be coupled to a towing vehicle, wherein the activation sensor may be connected to the front tow bar and measure the force with which the front tow bar is pulled manually. Instead of this or in addition, the trailer may be provided at the rear with a profile (extending over the width of the rear) which can be pushed for moving the trailer, where the activation sensor is connected to this profile. The pressure sensor or force sensor may also be designed as a push button, where the trailer is driven as long as the button is pressed.

A further embodiment of the trailer according to the invention is characterized in that the trailer is provided with adjusting means with which the degree to which the drive drives the trailer can be adjusted in dependence on the signal coming from the sensor.

### Brief description of the drawings

The invention will be explained in more detail with reference to an example of an embodiment of the trailer according to the invention shown in the drawings, in which:
Fig. 1 shows an embodiment of the trailer according to the invention designed as a double axle trailer;
Fig. 2 shows a side view of the trailer shown in Fig. 1; and
Fig. 3 shows a front view of the trailer shown in Fig. 1.

### Detailed description of the drawings

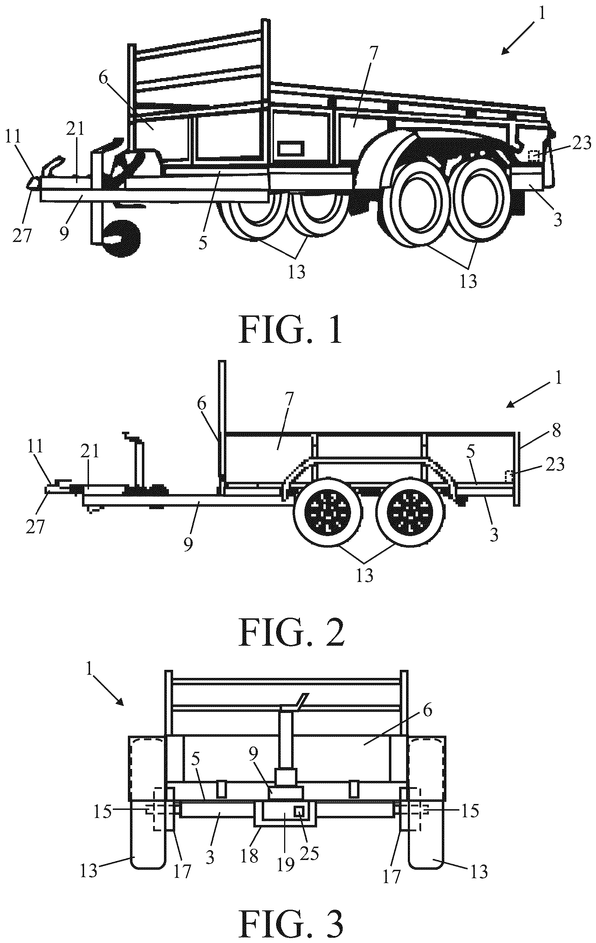

Figs. 1 - 3 show an embodiment of the trailer according to the invention. The trailer 1 has a chassis 3 on which a loading floor 5 is present with a front wall, side walls 7 and a rear wall 8 around the periphery. A front tow bar 9 is attached to the chassis and is provided with a coupling 11 for coupling the trailer to a tow hook of a towing vehicle. The trailer has four wheels 13 which are present on two imaginary wheel axles. The wheels are mounted on wheel carriers 15 which are connected to the chassis.

The trailer is provided with a drive which is connected to two of the wheels. This drive is formed by two electric motors 17 which are directly connected to these wheels. The trailer further includes a battery 18 and control means 19 for controlling the electric motors.

Furthermore, the trailer includes a plurality of activation sensors 21 and 23 which are present against the front tow bar 9 and the rear wall 8, respectively. These activation sensors are also connected to the control means 19. The control means are embodied such that they control the drive in dependence on a signal coming from the activation sensors. In this case the trailer is designed for being pulled and/or pushed manually, where the intention is then that the front tow bar 9 is pulled manually and/or the rear wall 8 is pushed. The activation sensors 21, 23 are therefore designed as a pressure sensor and a force sensor, respectively.

The control means 19 may optionally be provided with adjusting means 25 with which the degree to which the drive drives the trailer and thus the degree of support can be adjusted in dependence on the signal coming from the activation sensors

For preventing the drive of the trailer from being activated while the trailer is being towed by a towing vehicle, the trailer is provided with a coupling sensor 27 which records whether or not the trailer is coupled to a towing vehicle. The control means 19 are designed such that they do not activate the drive until the coupling sensor sends a signal that there is no coupling to a vehicle.

## Claims

1. Trailer (1) comprising:
- a chassis (3) on which a loading floor (5) is present, as well as
- wheels (13) connected to the chassis (3),
- a front tow bar (9) connected to the chassis (3) and being provided with a coupling (11) for coupling the trailer to a tow hook of a towing vehicle,
- a rear wall (8) connected to the loading floor (5),
- a drive which is connected to at least one of the wheels (13), which drive comprises a motor (17) as well as control means (19) for controlling the motor, and
- an activation sensor (21, 23) which is coupled to the control means, the control means (19) being arranged such that they control the drive in dependence on a signal coming from the activation sensor (21, 23),
**characterized in that** the activation sensor (21, 23) is a pressure sensor or a force sensor which is connected to the front tow bar (9) or the rear wall (8) and measures the pressure or force applied to the front tow bar (9) or the rear wall (8), so that when the trailer (1) is pulled or pushed manually the control means (19) control the drive.

2. Trailer (1) as claimed in claim 1, **characterized in that** the trailer (1) comprises a further activation sensor (23), wherein one of the activation sensors (21) is connected to the front tow bar (9) and the other activation sensor (21) is connected to the rear wall (8).

3. Trailer (1) as claimed in claim 1 or 2, **characterized in that** the trailer furthermore includes a coupling sensor (27) which records whether or not the trailer is coupled to a vehicle, where the control means (19) are arranged such that they do not activate the drive until the coupling sensor sends a signal that there is no coupling to a vehicle.

4. Trailer (1) as claimed in claim 1, 2 or 3, **characterized in that** the motor (17) is an electric motor and the drive further includes a battery (18) which is connected to the electric motor, where the control means (19) are arranged such that, in dependence on the signal coming from the activation sensor, they energize the electric motor.

5. Trailer (1) as claimed in any one of the preceding claims, **characterized in that** the trailer is provided with adjusting means (25) with which the degree to which the drive drives the trailer can be adjusted in dependence on the signal coming from the activation sensor (21, 23).

## Patentansprüche

1. Anhänger (1) umfassend:
- ein Fahrgestell (3), auf dem sich ein Ladeboden (5) befindet,
- mit dem Fahrgestell (3) verbundene Räder (13),
- eine Deichsel (9), die mit dem Fahrgestell (3) verbunden und mit einer Kupplung (11) ausgestattet ist, um den Anhänger an einen Abschlepphaken eines Zugfahrzeugs zu koppeln,
- eine mit dem Ladeboden (5) verbundene Rückwand (8),
- einen Antrieb, der mit mindestens einem der Räder (13) verbunden ist, wobei dieser Antrieb einen Motor (17) sowie Steuermittel (19) zum Steuern des Motors umfasst, und
- einen Aktivierungssensor (21, 23), der mit dem Steuermittel gekoppelt ist, wobei das Steuermittel (19) derart ist, dass sie den Antrieb in Abhängigkeit von einem Signal vom Aktivierungssensor (21, 23) steuern,
**dadurch gekennzeichnet, dass** der Aktivierungssensor (21) ein Bewegungs- oder Geschwindigkeitssensor ist, der mit der Deichsel (9) oder der Rückwand (8) verbunden ist und den Druck oder die Kraft misst, die auf die Deichsel (9) oder die Rückwand (8) ausgeübt wird, so dass, wenn der Anhänger (1) manuell gezogen oder gedrückt wird, die Steuermittel (19) den Antrieb steuern.

2. Anhänger (1) nach Anspruch 1, **dadurch gekennzeichnet, dass** der Anhänger (1) einen weiteren Aktivierungssensor (23) aufweist, wobei einer der Aktivierungssensoren (21) mit der Deichsel (9) und der andere Aktivierungssensor (21, 23) mit der Rückwand (8) verbunden ist.

3. Anhänger (1) nach Anspruch 1 oder 2, **dadurch gekennzeichnet, dass** der Anhänger ferner mit einem Kopplungssensor (27) versehen ist, der registriert, ob der Anhänger mit einem Fahrzeug gekoppelt ist oder nicht, wobei die Steuermittel (19) solche sind, die sie nur der Antrieb aktivieren, wenn der Kupplungssensor ein Signal gibt, dass keine Kupplung an ein Fahrzeug vorhanden ist.

4. Anhänger (1) nach Anspruch 1, 2 oder 3, **dadurch gekennzeichnet, dass** der Motor (17) ein Elektromotor ist und der Antrieb ferner eine mit dem Elektromotor verbundene Batterie (18) umfasst, wobei die Steuermittel (19) derart sind, dass Sie den Elektromotor in Abhängigkeit vom Signal des Aktivierungssensors aktivieren.

5. Anhänger (1) nach einem der vorhergehenden Ansprüche, **dadurch gekennzeichnet, dass** der Anhänger mit Einstellmitteln (25) versehen ist, mit denen der Grad, in dem der Antrieb den Anhänger antreibt, in Abhängigkeit von dem Signal vom Aktivierungssensor (21, 23) eingestellt werden kann.

## Revendications

1. Remorque (1) comprenant:
- un châssis (3) sur lequel se trouve un plancher de chargement (5), ainsi que
- des roues (13) reliées au châssis (3),
- un timon (9) relié au châssis (3) et pourvu d'une tête d'attelage (11) pour atteler la remorque à un crochet d'attelage d'un véhicule tracteur,
- un panneau arrière (8) relié au plancher de chargement (5),
- une transmission qui est reliée à au moins l'une des roues (13), laquelle transmission comprend un moteur (17) ainsi que des moyens de réglages (19) pour piloter le moteur, et
- un capteur d'activation (21, 23) qui est couplé aux moyens de réglages, où les moyens de réglages (19) sont tels qu'ils pilotent la transmission en fonction d'un signal en provenance du capteur d'activation (21, 23),
**caractérisée en ce que** le capteur d'activation (21) est un capteur de mouvement ou un capteur de vitesse qui est relié au timon (9) ou au panneau arrière (8) et qui mesure la pression ou la force qui est exercée sur le timon (9) ou sur le panneau arrière (8) afin que, si jamais la remorque (1) est tirée ou poussée manuellement, les moyens de réglages (19) pilotent la transmission.

2. Remorque (1) selon la revendication 1, **caractérisée en ce que** la remorque (1) comprend un capteur d'activation supplémentaire (23), où l'un des capteurs d'activation (21) est relié au timon (9) et l'autre capteur d'activation (21, 23) est relié au panneau arrière (8).

3. Remorque (1) selon la revendication 1 ou 2, **caractérisée en ce que** la remorque est de plus pourvue d'un capteur d'attelage (27) qui détecte si la remorque est couplée ou non au véhicule, où les moyens de réglages (19) sont conçus de telle sorte qu'ils activent seulement la transmission au cas où le capteur d'attelage émet un signal indiquant qu'il n'y a pas d'attelage au véhicule.

4. Remorque (1) selon la revendication 1, 2 ou 3, **caractérisée en ce que** le moteur (17) est un moteur électrique et **en ce que** la transmission comprend de plus une batterie (18) qui est reliée au moteur électrique, où les moyens de réglages (19) sont tels qu'ils excitent le moteur électrique en fonction du signal en provenance du capteur d'activation.

5. Remorque (1) selon une des revendications précédentes, **caractérisée en ce que** la remorque est pourvue de moyens de mise au point (25) grâce auxquels le degré avec lequel la transmission entraîne la remorque peut être mis au point en fonction du signal provenant du capteur d'activation (21, 23).
